# FASCICULE DE BREVET EUROPEEN

(11) **EP 0 586 283 B1**
(45) Date de publication et mention de la délivrance du brevet: **03.07.1996**
(21) Numéro de dépôt: 93402085.0
(22) Date de dépôt: 23.08.1993
(51) Int. Cl.: F16L 47/02, H01R 4/06, B29D 23/00, F16B 19/10

(54) **Pièce de raccordement électrosoudable à bornes de connexion perfectionnées et son procédé de fabrication**
Elektroschweissbares Verbindungsstück mit Anschlussklemmen und Verfahren zur dessen Herstellung
Connecting piece applicable for electric welding, with connecting terminals and method of manufacturing same

(30) Priorité: 01.09.1992 FR 9210450
(43) Date de publication de la demande: 09.03.1994
(73) Titulaire: GAZ DE FRANCE, F-75017 Paris (FR)
(72) Inventeur: Dufour, Denis, F-95130 Franconville (FR); Brunet, Martine, F-95410 Groslay (FR)
(74) Mandataire: Lerner, François

(56) Documents cités:
- EP-A- 0 010 055
- EP-A- 0 149 410
- EP-A- 0 278 553

## Description

L'invention se rapporte à une pièce de raccordement en matière plastique (telle qu'un manchon ou une selle de piquage) destinée à réunir axialement ou transversalement et par thermosoudage, deux canalisations, ceci en particulier dans le domaine gazier, l'invention portant plus particulièrement sur le perfectionnement des bornes de connexion de la résistance électriquement conductrice dont cette pièce est équipée.

A partir des publications EP-A-0 149 410 ou US-A-4 684 417, on connaît déjà une telle pièce comportant, pour la jonction thermosoudée de deux tubes en polyéthylène, une résistance électrique de chauffage consistant en un fil électriquement conducteur bobiné, noyé dans l'épaisseur de la pièce à proximité de sa surface intérieure de soudage.

L'opération de soudage est alors réalisée en plaçant en vis-à-vis la partie des pièces à souder et en raccordant le fil électrique bobiné à une source électrique (telle qu'une source de courant alternatif redressée) qui, par Effet Joule, va échauffer la résistance et provoquer le ramollissement jusqu'à fusion de la matière plastique environnante des pièces, en assurant un soudage sous pression.

Pour le raccordement électrique de la résistance, ses deux extrémités de fil sont habituellement soudées chacune à une borne de connexion débouchant souvent chacune dans un puits ou une cavité, de manière à pouvoir constituer deux broches sur lesquelles vont pouvoir s'enficher, à l'intérieur desdits puits, des douilles complémentaires amovibles.

Toujours dans le même domaine, d'autres types de résistance peuvent être utilisés.

Ainsi, la publication FR-A-2 654 978 propose-t-elle l'utilisation d'un filet à fil unique, ou d'une grille pouvant être réalisée à partir d'une plaque métallique étirée.

Il reste toutefois que le raccordement électrique extérieur de ce filet ou de cette grille demeure identique à la solution évoquée ci-dessus. Dans le premier cas (filet à fil unique), les deux extrémités du fil sont tirées pour être soudées aux broches précitées. Dans le second cas (grille étirée), on conseille d'utiliser deux plaques conductrices fixées à deux extrémités opposées de la grille, et deux câbles conducteurs de jonction soudés d'un côté auxdites plaques et de l'autre aux deux broches précitées.

Peuvent toutefois alors se poser des problèmes de fiabilité des jonctions soudées. Il y a également des risques que la zone de fusion du corps en matière plastique puisse venir endommager ces jonctions, au moment du soudage.

En outre, notamment dans le cas de l'utilisation d'un filet monofilaire, tout ceci implique des opérations de mise en oeuvre longues et délicates.

Une autre solution est proposée dans la demande EP-A-0278553. Dans cette demande, les bornes de connexion sont appliquées à une pièce de raccordement dans laquelle est noyée une résistance en fil bobiné. Ces bornes sont chacune constituées de deux pièces complémentaires qui sont emboitées l'une dans l'autre après avoir été introduites dans les cavités prévues à cet effet dans la pièce de raccordement. Les deux parties d'une même borne, soumises à deux forces de direction opposées, sont ainsi adaptées pour venir serrer une fine épaisseur de matière plastique où passe la résistance et, une fois "clipsées", établissent alors un contact électrique avec cette résistance. Toutefois l'utilisation de telles bornes impose de réaliser des taraudages de la pièce pour y introduire les deux éléments complémentaires des bornes. D'autre part, l'emboitement de ces éléments l'un dans l'autre pourrait entraîner (si les forces d'emboitement ne sont pas très précisement appliquées), une déformation préjudiciable de la pièce de raccordement.

Compte-tenu de cela, l'invention a notamment pour objet de proposer une pièce de raccordement dont les bornes de connexion assurent une connexion fiable, très rapide à réaliser par une opération simple, la jonction électrique obtenue avec la résistance étant particulièrement solide mécaniquement, sans risque notable de déchirement de cette résistance ou d'endommagement de la pièce.

Ainsi, a-t-il été imaginé de recourir à une jonction rivetée.

Plus précisement, l'invention propose tout d'abord une pièce de raccordement qui se caractérise en ce que ses bornes de connexion comprennent au moins un corps tubulaire de rivet en matière électriquement conductrice, faisant office de connecteur électrique et comportant un fût débouchant en surface du corps de la pièce, ce fût étant raccordé, à une extrémité, à une collerette contre laquelle est rabattue, du côté opposé au fût, une partie en bourrelet immobilisant la résistance de la pièce entre elle et la collerette.

Bien entendu, l'utilisation de rivets est connue en mécanique. Il est également connu, à partir de EP-A-0010055 d'utiliser un rivet en tant que douille électrique. Dans cette demande, un rivet aveugle est fixé sur une tôle pleine électriquement conductrice, pour établir un contact électrique avec cette tôle. Ce rivet est mis en place de manière connue, grâce à une pince exerçant d'un seul côté une traction sur l'élément mâle du rivet, l'élément femelle étant maintenu en appui sur la tôle.

Mais EP-A-0010055 ne concerne pas dans le domaine de l'électrosoudage.

Ce document ne prend donc pas en compte les problèmes propres aux pièces plastiques électrosoudables et notamment les questions :
a) - de contraintes mécaniques et thermiques que doit supporter la résistance ainsi que sa jonction lors du soudage,
b) - de mise en place desdites bornes au sein de la pièce elle-même.

Au regard du point a), rien n'indique que la jonction rivetée de EP-A-0010055 pourrait convenir dans le cadre d'une pièce électrosoudable, cela d'autant que le document EP-A-0278553 invite à utiliser des bornes électriques en deux pièces, pouvant donc certainement au moins légèrement jouer l'une par rapport à l'autre et par rapport à la résistance, si les contraintes mécaniques dûes au chauffage pendant le soudage sont trop importantes. On remarquera également que le rivet de EP-A-0010055 est fixé sur une plaque pleine, donc relativement rigide, alors que les bornes de EP-A-0278553 sont fixées à un fil bobiné.

En outre, au regard du point b), si, partant de EP-A-0278553, on cherchait à installer, à la place des bornes à d'éléments emboitables, le rivet décrit dans EP-A-0010055, par application classique, d'un côté, d'une force sur son élément mâle (l'élément femelle étant en appui sur la fine couche de matière plastique renfermant la résistance), cela risquerait certainement d'entrainer une déformation néfaste de cette couche, voire de la résistance en fil.

Or, allant précisement à l'encontre de l'enseignement que l'homme de l'art aurait pu tirer de EP-A-0278553 et EP-A-0010055 l'invention propose justement, d'utiliser un rivet (et plus précisement son élément femelle), en tant que connecteur électrique pour alimenter la résistance d'une pièce de jonction pour la réunion thermosoudée notamment de tubes en polyéthylène.

En pratique, le corps femelle du rivet assurera sa fonction de connexion par l'intermédiaire de son fût à qui on pourra faire jouer le rôle de broche. Et la pièce de raccordement, objet de la présente invention pourra constituer un manchon électrosoudable pour la réunion sensiblement coaxiable par thermosoudage de deux tubes. Cette pièce pourra également constituer une prise de branchement électrosoudable pour la réunion transversale des tubes.

Avantageusement et comme indiqué plus haut, l'invention est tout particulièrement applicable si la résistance se présente comme un filet maillé monofilaire, lequel est particulièrement sensible aux contraintes pouvant être induites au moment du soudage.

Un autre problème qui se pose est donc celui du contact électrique à établir avec ce type particulier de résistance dans les meilleurs conditions d'efficacité et en liaison avec les problèmes de contraintes mécaniques évoqués précédemment.

La solution proposée ici consiste à associer à chaque corps de rivet engagé à travers une maille de la résistance, des moyens de déchirement de la couche de revêtement dudit fil à l'endroit du rivetage de la borne, assurant ainsi le contact électrique, lesdites bornes, étant en outre, avec la résistance, noyées en partie, de moulage, dans le corps de la pièce. En pratique et de préférence, les moyens de déchirement retenu s'étendront autour de cette maille en regard du bourrelet de la borne. A ce sujet, et en fonction de la taille des mailles du filet, on pourra en particulier utiliser deux rondelles pour chaque rivet, venant enserrer entre elles le filet, l'une de ces rondelles (pouvant tout particulièrement être du type "cranté").

Enfin, compte-tenu de ce qui précède, l'invention se rapporte également à un procédé de fabrication d'une pièce de raccordement de l'un des types précités, caractérisé en particulier en ce que :
- on sertit les bornes de connexion à la résistance,
- et on surmoule sur elles le corps de la pièce de raccordement, en faisant déboucher le fût de chaque borne dans un puits aménagé sur une surface extérieure du corps de la pièce et présentant une section supérieure à celle du fût.

On notera qu'un tel procédé de fabrication présente l'avantage d'être simple de mise en oeuvre, la fiabilité de la liaison électrique bornes-résistance évitant pratiquement tout risque de rupture de cette liaison, au moment du surmoulage notamment. En outre, la fixation des bornes sur la résistance avant de surmouler l'ensemble permet d'éviter les riques possibles de déformation de la pièce liés à la mise en place des bornes sur le corps déjà formé, avec sa résistance.

D'autres avantages de l'invention apparaitront encore de la description plus détaillée qui va suivre faite en référence aux dessins annexés qui montrent à titre non limitatif des exemples de réalisation et d'utilisation de l'invention.

Ainsi, sur ces figures :
- la figure 1 montre, en vue éclatée, les deux pièces pouvant constituer la base du rivet de connexion électrique de l'invention,
- la figure 2 montre la mise en place du rivet de la figure 1 pour la connexion électrique d'une pièce conductrice,
- la figure 3 montre l'ensemble de la figure 2 une fois le rivet riveté,
- la figure 4 montre le rivet de la figure 1 auquel ont été adjoint deux rondelles, le rivet étant en l'espèce disposé en position prête à enserrer une portion de filet,
- la figure 5 montre un détail de réalisation possible du fil constituant le filet illustré sur la figure 4, selon le détail V de cette même figure,
- la figure 6 montre l'ensemble de la figure 4 une fois la pièce de connexion rivetée,
- la figure 7 montre une conformation possible de filet monofilaire utilisable en particulier sur un manchon de raccordement thermosoudable,
- la figure 8 est une vue du filet de la figure 7 dans le sens de la flèche VIII de cette même figure 7,
- la figure 9 montre un détail de réalisation du filet, à l'endroit du repère IX de la figure 7,
- la figure 10 représente, en coupe longitudinale médiane, un manchon de raccordement électrosoudable équipé de l'assemblage rivets-filet,
- la figure 11 représente une autre forme possible de réalisation d'un tel filet à aspect d'anneau ou de couronne,
- et la figure 12 présente une vue en coupe longitudinale médiane d'une selle de piquage équipée du filet en rosace de la figure 11, ici représenté en vue arrachée.

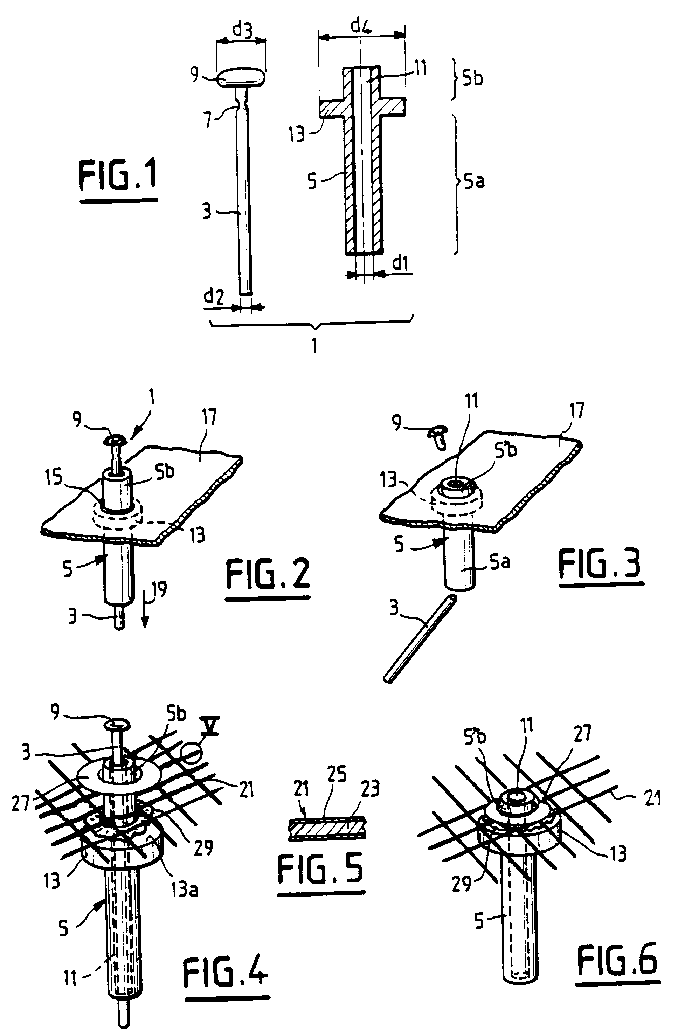

Sur la figure 1 tout d'abord, on voit donc représentée une pièce d'assemblage de type rivet "aveugle" que l'on va donc utiliser en tant que borne de connexion électrique.

La pièce repérée dans son ensemble 1 comprend une tige mâle 3 de rivet, éjectable, et un corps femelle allongé 5.

La tige 3 (appelée également "clou") est dite "éjectable" en ce qu'elle se brise à l'endroit d'un col préformé de rupture 7 et se sépare du corps 5 une fois celui-ci riveté, la tige étant alors éjectée de l'appareil à riveter.

On remarquera que cette tige 3 présente, à une extrémité et à proximité de la gorge 7, une partie élargie 9 formant tête.

Quant au corps 5, il est traversé par un passage axial 11 de section d1 intermédiaire entre la section d2 de la tige et celle d3 de la tête 9, de manière que seule ladite tige 3 puisse y être insérée.

Outre cela, le corps 5 présente, en un endroit intermédiaire de sa longueur axiale, une collerette extérieure 13 délimitant un tronçon tubulaire inférieur 5a (le plus long) et un tronçon tubulaire supérieur 5b (le plus court).

De préférence, (et en fait de manière classique) les deux parties de la pièce 1, tige et corps, seront réalisées en métal, tel qu'en aliminium habituellement, étant ainsi électriquement conductrices et relativement maléables sous effort, sans se rompre.

A titre d'exemple de réalisation, le clou 3 pourra présenter une longueur d'environ 40 millimètres avec une section de tige de l'ordre du millimètre et une section de tête (d₃) de l'ordre de 2 millimètres. Quant au corps tubulaire 5, il pourra présenter une longueur d'environ 25 millimètres, chaque tronçon (5a, 5b) pouvant avoir une longueur d'environ 15 et 8 millimètres, respectivement.

Sur la figure 2, on a représenté la pièce 1 engagée dans un orifice 15 ménagé à travers une pièce électriquement conductrice 17, telle qu'une plaque métallique devant être alimentée en énergie électrique via une borne de connexion, rôle que l'on va faire jouer à la pièce 1, une fois celle-ci rivetée sur cette plaque.

Pour permettre la fixation de la pièce 1, le diamètre de l'orifice 15 sera inférieur au diamètre d₄ (voir figure 1) de la collerette 13 qui a été placée juste sous la plaque 17 dont l'orifice 15 est seulement traversé par le tronçon tubulaire supérieur 5b.

A travers le corps 5 a été mise en place la tige 3, de telle manière que sa tête 9 débouche du côté du tronçon supérieur 5b.

Une fois la pièce 1 ainsi disposée, il va suffire, pour la fixer, d'utiliser une pince à riveter classique du commerce, telle qu'une pince de la marque "FACOM" (marque déposée), modèle "GESIPA NT X".

Sous l'action des mâchoires de cette pince qui va exercer une traction axiale sur la tige 3 dans le sens de la flèche 19 de la figure 2, la tête 9 va exercer un effort de pression sur le tronçon 5b qui, réalisé en une matière déformable plastiquement, va s'écraser depuis son extrémité supérieure libre pour former un bourrelet repéré 5'b sur la figure 3, la section de ce bourrelet étant alors supérieure à la section de l'orifice 15, maintenant ainsi, par cette opération de rivetage, la plaque 17 entre le bourrelet formé et la collerette 13.

Au cours de cette opération, et comme indiqué ci-avant, le clou 3 va se briser à l'endroit de sa zone préformée de rupture 7, la partie inférieure de tige étant éjectée d'un côté, le reste de cette tige et la tête 9 étant éjectés de l'autre.

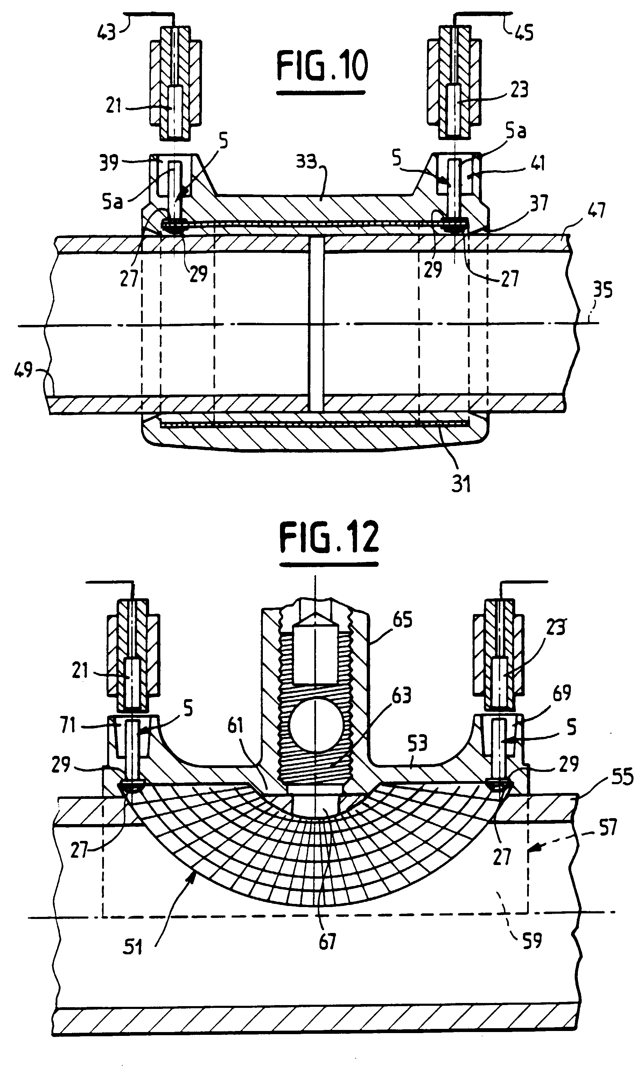

De cette manière, il ne reste plus, fixé à la plaque, que le seul corps 5 électriquement conducteur dont le fût cylindrique 5a va pouvoir être utilisé comme broche pour le raccordement à une douille associée, telle par exemple que l'une des deux douilles 21, 23 illustrées figures 10 et 12.

Sur les figures 4 et suivantes, on a illustré l'application de la borne de connexion de l'invention au raccordement électrique d'une pièce conductrice réalisée sous la forme d'un tissu ou d'un filet maillé.

Un tel filet utilisé sur une pièce de raccordement électrosoudable est en particulier décrit dans la publication FR-A-2 654 978 (brevet américain correspondant US-A-5 141 580). Pour tout renseignement complémentaire concernant ce filet, on pourra se reporter à ces publications qui sont introduites par référence dans la présente description.

Ainsi, sur la figure 4 a-t-on représenté une portion de filet à tronçons entrelacés, le filet ayant pour particularité d'être de préférence réalisé à partir d'un fil unique électriquement conducteur 21 (c'est-à-dire assurant une continuité électrique d'un bout à l'autre du réseau). La structure de ce fil a été rappelée sur la figure 5, à partir de laquelle on peut constater que ledit fil peut en particulier être constitué d'un câble conducteur 23 (par exemple en cuivre) de quelques dixièmes de millimètre de diamètre, enrobé d'une couche ou d'une pellicule 25, par exemple à base de polyesterimide, électriquement isolante au moins jusqu'à une température prédéterminée (environ 250°C).

Sur la figure 4, la tige 3 a été représentée insérée dans le passage intérieur 11 du corps 5, de telle manière que sa tête 9 ressorte du côté du tronçon 5b qui traverse l'une des mailles du filet. Pour la bonne tenue de l'ensemble, deux rondelles métalliques de plus fort diamètre 27, 29 ont été adjointes, l'une au-dessus du filet, l'autre en-dessous.

Lorsque le rivetage aura été effectué, on retrouvera ainsi, comme représenté sur la figure 6, le filet ou le tissu maillé correspondant étroitement maintenu entre les deux rondelles 27, 29, le bourrelet 5'b maintenant étroitement serré le tout, entre lui et la collerette 13.

Si le fil du maillage utilisé est du type de celui de la figure 5, il faudra alors prévoir, sur le rivet, des moyens de rupture pour déchirer au moment du rivetage la pellicule 25 à l'endroit de la pose du rivet, de manière à assurer ainsi le contact électrique.

Ces moyens de déchirement pourraient par exemple consister en des stries ménagées sur la surface "supérieure" 13a (voir figure 4) de la collerette 13.

Mais en l'espèce, on a préféré utiliser, en tant que rondelle 29, une rondelle crantée devant assurer le même effet. Ainsi ces moyens de déchirement s'étendent autour de la maille traversée par la borne, c'est-à-dire sensiblement perpendiculairement au fût 5, entre la maille concernée et la collerette 13, en regard du bourrelet 5'b (voire de son côté).

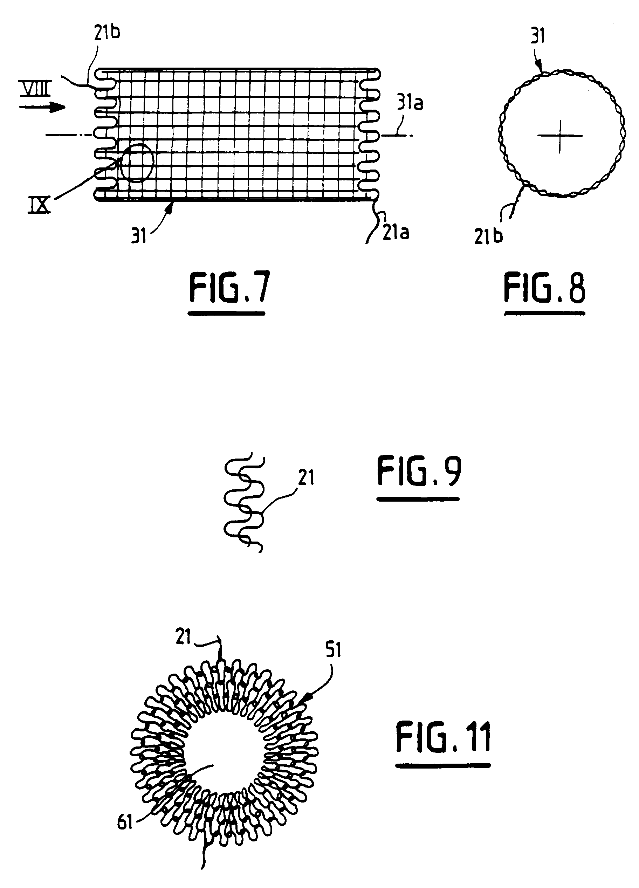

Intéressons-nous maintenant aux figures 7 à 9 pour décrire brièvement l'utilisation, sur un manchon plastique électrosoudable, d'un tel filet maillé ainsi raccordé vers chacune des extrémités de son fil, à la borne de connexion 5 de la figure 6.

Sur les figures 7 et 8, on remarquera la forme tubulaire en cylindre de section sensiblement circulaire du filet 31 dont les deux extrémités opposées du fil qui le constituent ont été repérées 21a et 21b.

Sur la figure 9, on a illustré schématiquement la manière dont les boucles en "Ω" du fil 21 s'entrelacent entre elles pour constituer les mailles du filet, filet que l'on retrouve disposé à l'intérieur du manchon de raccordement electrosoudable 33 sur la figure 10.

Hormis cette résistance en filet 31 qui est ici disposée avec son axe 31a de cylindre confondu sensiblement avec l'axe 35 du large orifice cylindrique central 37 qui traverse de part en part le manchon, ce dernier présente localement, sur deux côtés opposés de son pourtour extérieur, deux cavités ou puits 39,41 ouverts sur l'extérieur et en l'espèce dirigés sensiblement perpendiculairement à l'axe 35. Dans chacune de ces cavités, débouche l'extrémité libre de l'un des deux fûts 5a d'une borne de connexion 5 conforme à l'invention. Bien entendu, chaque borne 5 a été préalablement rivetée au filet resistif avec interposition de la rondelle 27 et de la rondelle crantée 29.

Ainsi disposés, les deux fûts 5a vont pouvoir constituer deux broches de raccordement électrique, connectables, si on a pris soin de leur donner une longueur et un diamètre convenables, avec deux douilles de raccordement classiques, telles que les douilles 21 et 23, elles-mêmes raccordées chacune à leur câble conducteur d'alimentation, respectivement 43 et 45.

Sur la figure 10, on a également représenté les deux tubes 47, 49 en matière plastique thermosoudable, destinés à être réunis ensemble via le manchon 33. En l'espèce, ces tubes ont été disposés coaxialement pour que leurs deux extrémités se faisant face soient insérées assez étroitement à l'intérieur de l'orifice 37 du manchon.

Intéressons-nous maintenant aux figures 11 et 12 pour montrer une autre application de l'invention.

Sur la figure 11 tout d'abord, on pourra remarquer la forme en anneau aplati du filet conducteur, repéré en l'espèce 51.

L'élément 51 peut être réalisé à partir de la structure cylindrique maillée des figures 7 et 8 dont on aura coupé un tronçon, lequel tronçon aura été écrasé sur lui-même et aplati de manière à constituer un anneau circulaire à double épaisseur.

C'est cet anneau 51 à fil résistif unique que l'on retrouve sur la figure 12.

Sur cette figure, on voit plus généralement représentée une prise de branchement électrosoudable 53 pour le raccordement transversal d'un tube 55 avec un autre tube (non représenté).

En l'espèce, la pièce 53 dont le corps est réalisé en une matière plastique thermofusible (telle que du polyéthylène), comme l'était le corps du manchon 33, présente une partie 57 en forme de selle avec une surface intérieure 59 formant une portion de cylindre de section hémicirculaire, de manière à pouvoir chevaucher sensiblement coaxialement la canalisation 55.

A proximité de cette surface intérieure 59, et noyée dans son corps plastique, la pièce 53 renferme l'anneau résistif 51 lequel présente bien entendu une courbure correspondant sensiblement à celle de la selle 57, l'orifice central 61 de cette résistance 51 entourant, à quelque distance, le passage 63 du fût 65, lequel se dresse sensiblement à mi-longueur de la prise, perpendiculairement à l'axe de la canalisation 55. En pratique, et comme connu en soi, le passage 63 est destiné à être prolongé par un orifice coaxial 67 permettant de faire communiquer transversalement la conduite 55 avec un autre tube lequel sera installé et correctement raccordé sur le fût saillant 65.

Comme précédemment, et sensiblement au niveau des deux extrémités de son fil constitutif, l'anneau résistif 51 est relié aux bornes de connexion 5 alors rivetées et présentant de préférence leurs rondelles 27, 29.

Comme sur la figure 10, les deux bornes 5 se dressent pour déboucher dans deux puits extérieurs transversaux 69, 71, étant ainsi chacune raccordable aux douilles amovibles 21, 23.

En pratique, la fabrication des deux pièces 33, 53 sera facile à mettre en oeuvre. Pour cela, il suffira, après avoir choisi la résistance la plus adaptée, (telle que le cylindre résistif 31 pour le manchon 33 et l'anneau résistif 51 pour la prise de piquage transversal 53), on fixera par rivetage les deux bornes de connexion 5, en prenant soin de les disposer en deux endroits permettant d'assurer une circulation du courant telle qu'il chemine, depuis l'une des bornes, au moins dans l'essentiel de ladite résistance, avant de parvenir à la seconde borne.

Une fois cette opération de sertissage terminée, on placera alors la résistance avec ses bornes dans une machine de moulage, en soi connu et on surmoulera, sur elles, par injection, le corps en matière plastique de la pièce de raccordement. Au cours de cette opération, les puits 39, 41 ou 69, 71 seront réalisés avec, passant à travers eux, les fûts 5a (de section nettement inférieure à celle desdits puits).

Il suffira alors de laisser refroidir la pièce jusqu'à complète solidification.

## Revendications

1. Pièce de raccordement pour la réunion de deux tubes (47, 49, 55) au moins en partie en matière plastique thermosoudable, constituée d'un corps (33, 53) en matière plastique thermosoudable renfermant :
- une résistance (31, 51) adaptée pour chauffer la matière thermosoudable dudit corps (33, 53) en permettant sa soudure à la matière plastique des tubes,
- et des bornes de connexion raccordées électriquement à la résistance et traversant le corps pour déboucher en surface de celui-ci,
caractérisée en ce que lesdites bornes (5) comprennent au moins un corps tubulaire de rivet en matière électriquement conductrice, faisant office de connecteur électrique et comportant un fût (5a) débouchant en surface du corps de la pièce (33, 53), ce fût étant raccordé, à une extrémité, à une collerette (13) contre laquelle est rabattue, du côté opposé au fût, une partie en bourrelet (5'b) immobilisant ladite résistance (31, 51) entre elle et ladite collerette.

2. Pièce de raccordement selon la revendication 1, caractérisée en ce que :
- la résistance (31, 51) présente une structure maillée à fil unique (21), lequel est réalisé en une matière électriquement conductrice et est revêtu d'une pellicule électriquement isolante (25), et
- lesdites bornes (5), rivetées chacune à travers une maille de la résistance, sont, avec cette résistance, noyées en partie, de moulage, dans ledit corps, chaque borne comportant des moyens de rupture (29) pour déchirer la pellicule (25) de revêtement du fil assurant ainsi le contact électrique.

3. Pièce de raccordement selon la revendication 2, caractérisée en ce que les moyens de rupture (29) associés à chaque borne s'étendent autour de la maille traversée par cette borne, en regard du bourrelet (5'b).

4. Pièce de raccordement selon l'une quelconque des revendications 2 ou 3, caractérisée en ce que chaque borne de connexion (5) est équipée au moins de deux rondelles (27, 29) électriquement conductrices, de section extérieure supérieure à celle des mailles de la résistance (31, 51), lesdites rondelles étant disposées de part et d'autre de la résistance pour l'immobiliser, l'une au moins des rondelles (29) présentant des aspérités pour déchirer, à l'endroit où la résistance est immobilisée par lesdites rondelles, la pellicule électriquement isolante (25) qui recouvre son fil conducteur, assurant ainsi le contact électrique.

5. Pièce de raccordement selon l'une quelconque des revendications 1 à 4, caractérisée en ce que chaque fût (5a) des bornes de connexion moulé dans le corps (33, 53), débouche en surface de celui-ci à l'endroit d'une cavité ouverte (39, 41 ; 69, 71) de section supérieure à celle dudit fût, lequel constitue une broche de connexion.

6. Pièce de raccordement selon l'une quelconque des revendications précédentes, caractérisée en ce qu'elle constitue un manchon électrosoudable (33) pour la réunion sensiblement coaxiale des tubes (47, 49), le corps (33) de la pièce étant traversé axialement par un orifice (37) adapté pour recevoir coaxialement les tubes et autour duquel s'étend la résistance (31).

7. Pièce de raccordement selon l'une quelconque des revendications 1 à 5, caractérisée en ce qu'elle constitue une prise de branchement électrosoudable pour la réunion transversale des tubes (55), le corps (53) de la pièce présentant une surface intérieure (59) sensiblement cylindrique autour de laquelle est disposée la résistance (51) et transversalement à laquelle s'étend un conduit (63) qui se prolonge à l'intérieur d'un fût (65) faisant saillie extérieurement au corps.

8. Procédé de fabrication d'une pièce de raccordement selon l'une quelconque des revendications 1 à 7, caractérisé en ce que :
- on rivète les bornes de connexion (5) à la résistance (31, 51),
- et on surmoule, sur eux, le corps de la pièce de raccordement (33, 53), en faisant déboucher le fût (5a) de chaque borne dans une cavité ouverte (39, 41 ; 69, 71) présentant une section supérieure à celle dudit fût et aménagée sur une surface extérieure du corps.

## Patentansprüche

1. Verbindungsstück zur Verbindung zweier wenigstens teilweise aus thermoschweißbarem Kunststoff bestehenden Rohre (47, 49, 55), gebildet aus einem thermoschweißbarem Körper (33, 53) aus Kunststoffmaterial, umfassend
- einen Widerstand (31, 51), ausgebildet zum Erwärmen des thermoschweißbaren Materials des Körpers (33, 53) unter Freigeben seines Schweißmaterials an das Kunststoffmaterial der Rohre
- und elektrisch mit dem Widerstand verbundene und den Körper unter Durchtritt durch dessen Oberfläche durchquerende Verbindungsanschlüsse,
dadurch gekennzeichnet, daß diese Verbindungsanschlüsse (5) wenigstens einen rohrförmigen Nietkörper aus elektrisch leitendem Material, als elektrische Verbindung dienend und einen Schaft (5a) aufweisend, der in die Oberfläche des Körpers des Teils (33, 53) einmündet, umfassen, wobei der Schaft an einem Ende mit einem Kragen (13) verbunden ist, gegen den auf der dem Schaft entgegengesetzten Seite ein Flansch (5'b) gesetzt ist, der den Widerstand (31, 51) zwischen sich und dem Kragen festsetzt.

2. Verbindungsstück nach Anspruch 1, dadurch gekennzeichnet, daß :
- der Widerstand (31, 51) eine Maschenstruktur aus einem einzigen Draht (21) aufweist, der aus einem elektrisch leitenden Material ausgeführt ist und der mit einem dünnen elektrisch isolierenden Überzug (25) verkleidet ist, und
- die Anschlüsse (5), die jeweils durch eine Widerstandsmasche genietet sind, mit diesem Widerstand beim Gießen teilweise in den Körper eingelassen sind, wobei jeder Anschluß Reißmittel (29) zum zerreißen des dünnen Überzugs (25) der Drahtverkleidung umfaßt, um so den elektrischen Kontakt sicherzustellen.

3. Verbindungsstück nach Anspruch 2, dadurch gekennzeichnet, daß die Reißmittel (29), die jedem Anschluß zugeordnet sind, sich im Hinblick auf den Flansch (5'b) um die Masche, die von dem Anschluß durchquert wird, herum erstrecken.

4. Verbindungsstück nach Anspruch 2 oder 3, dadurch gekennzeichnet, daß jeder Verbindungsanschluß (5) mit wenigstens zwei elektrisch leitenden Scheiben (27, 29) von größerem äußerem Querschnitt als dem der Maschen des Widerstandes (31, 51) versehen ist, wobei die Scheiben zu beiden Seiten des Widerstands angeordnet sind, um diesen festzusetzen, wobei wenigstens eine der Scheiben (29) Unebenheiten aufweist, um dort, wo der Widerstand durch die Scheiben befestigt ist, den dünnen elektrisch isolierenden Überzug (25), der seinen elektrisch leitenden Draht abdeckt, zu zerreißen und so den elektrischen Kontakt sicherzustellen.

5. Verbindungsstück nach einem der Ansprüche 1 bis 4, dadurch gekennzeichnet, daß jeder Schaft (5a) der Verbindungsanschlüsse, der in dem Körper (33, 53) geformt ist, an dessen Oberfläche in einer offenen Vertiefung (39, 41; 69, 71) mit einem größeren Querschnitt als dem des einen Verbindungsdorn bildenden Schaftes austritt.

6. Verbindungsstück nach einem der vorangehenden Ansprüche, dadurch gekennzeichnet, daß es eine thermoschweißbare Hülse (33) zur im wesentlichen koaxialen Verbindung der Rohre (47, 49) bildet, wobei der Körper (33) des Verbindungsstücks axial von einer zum koaxialen Aufnehmen der Rohre ausgebildeten Öffnung (37) durchquert ist, um die herum sich der Widerstand (31) erstreckt.

7. Verbindungsstück nach einem der Ansprüche 1 bis 5, dadurch gekennzeichnet, daß es einen thermoschweißbaren Verbindungs- bzw. Abzweigstecker zur transversalen Verbindung der Rohre (55) bildet, wobei der Körper (53) des Stücks eine innere, im wesentlichen zylindrische Oberfläche (59) aufweist, um die der Widerstand (51) angeordnet ist und zu der sich quergerichtet eine Leitung (63) erstreckt, die sich in das Innere eines Schaftes (65), der außerhalb des Körpers vorspringt, verlängert.

8. Verfahren zur Herstellung eines Verbindungsstücks nach einem der Ansprüche 1 bis 7, dadurch gekennzeichnet, daß
- die Verbindungsanschlüsse (5) auf den Widerstand (31, 51) genietet werden,
- und über ihnen der Körper des Verbindungsstückes (33, 53) gegossen wird, indem man den Schaft (5a) jedes Anschlusses in einer offenen Vertiefung (39, 41; 69, 71) münden läßt, die einen größeren Querschnitt als der Schaft aufweist und an einer äußeren Fläche des Körpers angeordnet ist.

## Claims

1. Connecting piece for joining two pipes (47, 49, 55) made at least partially of heat-sealable plastics material, the piece being constituted by a body (33, 53) of heat-sealable plastics material including:
- a resistor (31, 51) suitable for heating the heat-sealable material of the said body (33, 53) enabling it to be welded to the plastics material of the pipes,
- and connecting terminals connected electrically to the resistor and extending through the body in order to emerge in the surface thereof,
characterized in that the said terminals (5) comprise at least one tubular rivet body of electrically conducting material serving as an electrical connector and including a shank (5a) emerging at the surface of the body of the piece (33, 53), this shank being connected at one end to a collar (13) against which a shoulder portion (5'b) is pressed down on the opposite side to the shank, immobilizing the said resistor (31, 51) between it and the said collar.

2. Connecting piece according to Claim 1, characterized in that:
- the resistor (31, 51) has a single-wire meshed structure (21) made of an electrically conducting material and coated with an electrically insulating film (25), and
- the said terminals (55), each riveted through a mesh of the resistor, are partially embedded, with this resistor, by moulding, in the said body, each terminal including tearing means (29) for tearing the film (25) covering the wire thus ensuring the electrical contact.

3. Connecting piece according to Claim 1, characterized in that the tearing means (29) associated with each terminal extend around the mesh through which this terminal extends, facing the shoulder (5'b).

4. Connecting piece according to either of Claims 2 and 3, characterized in that each connecting terminal (5) is equipped with at least two electrically conducting washers (27, 29) of external cross-section larger than that of the meshes of the resistor (31, 51), the said washers being disposed on each side of the resistor in order to immobilize it, at least one of the washers (29) having rough portions for tearing the electrically insulating film (25) which covers its conductor wire in the location where the resistor is immobilized by the said washers, thus ensuring the electrical contact.

5. Connecting piece according to any one of Claims 1 to 4, characterized in that each shank (5a) of the connecting terminals which is moulded in the body (33, 53) emerges in the surface thereof in the location of an open cavity (39, 41; 69, 71) with a cross-section larger than that of the said shank which constitutes a connecting pin.

6. Connecting piece according to any one of the preceding claims, characterized in that it constitutes a sleeve (33) which can be welded electrically for the substantially coaxial joining of the pipes (47, 49), the body (33) of the piece being traversed axially by a hole (37) which is suitable for housing the pipes coaxially and around which the resistor (31) extends.

7. Connecting piece according to any one of Claims 1 to 5, characterized in that it constitutes a branch connection which can be welded electrically for the transverse joining of the pipes (55), the body (53) of the piece having a substantially cylindrical internal surface (59) around which the resistor (51) is disposed, a duct (63) extending transverse the cylindrical surface (59) and being extended inside a cylinder (65) projecting from the body.

8. Method of manufacturing a connecting piece according to any one of Claims 1 to 7, characterized in that:
- the connecting terminals (5) are riveted to the resistor (31, 51),
- and the body of the connecting piece (33, 53) is moulded over them, the shank (5a) of each terminal being made to emerge in an open cavity (39, 41; 69, 71) having a cross-section larger than that of the said shank and disposed on an external surface of the body.
